Europäisches Patentamt

European Patent Office

Office européen des brevets

(11) Publication number: **0 182 470**
**B1**

**EUROPEAN PATENT SPECIFICATION**

(45) Date of publication of patent specification: **06.06.90**

(21) Application number: **85306631.4**

(22) Date of filing: **18.09.85**

(51) Int. Cl.⁵: **E 01 C 7/26,** C 08 L 23/02,
C 09 D 119/00

(54) Liquid rubber composition.

(30) Priority: **27.09.84 US 655478**

(43) Date of publication of application:
**28.05.86 Bulletin 86/22**

(45) Publication of the grant of the patent:
**06.06.90 Bulletin 90/23**

(84) Designated Contracting States:
**DE FR GB IT NL SE**

(56) References cited:
**EP-A-0 075 108
DE-A-1 494 431
GB-A-1 001 455
US-A-3 847 723**

The file contains technical information
submitted after the application was filed and
not included in this specification

(73) Proprietor: **UNIROYAL CHEMICAL COMPANY, Inc.**
**World Headquarters**
**Middlebury Connecticut 06749 (US)**

(72) Inventor: **Visser, Harry D.**
**231 Argyle Road**
**Cheshire Connenticut 06410 (US)**
Inventor: **Miller, Robert**
**3 Old Quarry Road**
**Woodbridge Connecticut 06525 (US)**
Inventor: **Merijanian, Aspet V.**
**150 Chesham Drive**
**Middlebury Connecticut 06762 (US)**
Inventor: **Sigworth, William D.**
**99 Deepwood Road**
**Naugatuck Connecticut 067770 (US)**

(74) Representative: **Harrison, Michael Robert et al**
**URQUHART-DYKES & LORD 5th Floor Tower**
**House Merrion Way**
**Leeds LS2 8PA West Yorkshire (GB)**

Courier Press, Leamington Spa, England.

**Description**

1. Field of invention

The present invention is directed to a liquid rubber composition based on liquid polymers of ethylene-propylene-(optionally) non-conjugated diene monomers (EP(D)M), which can be applied by spray techniques and may be cured under ambient conditions. The cured composition is highly weather resistant and therefore suitable for exterior applications such as roofing, caulks, sealants and flashing.

Percentages and parts of compositions in this specification are defined by weight.

2. Description of the prior art

The concept of an exterior protective coating which can be applied in liquid form with little or no solvent is an attractive one. Roofing is a major exterior protective coating, and the roofing industry has progressed from the familiar built-up asphalt roofing to single-ply elastomeric roofing and in some cases to sprayed liquid systems such as polyurethanes. Polyurethane roofing, however, is not sufficiently resistant to weathering, so that it must be covered by a protective coating. The use of single-ply membrane roofing which possesses a high order of weather and environmental resistance has been gaining in popularity.

By "membrane" is meant an elastomeric sheet. Membranes are often applied to a roof surface merely by unrolling it on the roof and holding it in place by means of stone ballast, an adhesive, or by mechanical means. Although a number of different elastomers are being used for these roofing membranes, by far the most widely used one is EPDM (ethylene-propylene-diene terpolymer). This popularity is justified by the outstanding weather and environmental resistance of the terpolymer.

A major problem associated with the application of all membrane roofing is the necessity for sealing off protrusions, joints, and borders. At present this is accomplished either by laboriously cutting and fitting pieces or strips of vulcanized or unvulcanized elastomers around a protuberance or applying a caulk or grout with a trowel or caulking gun to joints and borders. Elastomers used in strips or pieces, termed "flashing", include neoprene (poly(2-chloro-1,3-butadiene)) and EPDM. Neoprene in either unvulcanized or vulcanized form suffers from many disadvantages. It is deficient in weather resistance, in terms of both its resistance to the high temperatures and to intense ultraviolet irradiation encountered on roof surfaces. It is, in fact, usually recommended that neoprene flashing be protected by a coat of reflective paint applied to it. Neoprene compositions are also known to be deficient for outdoor use in ozone resistance, low temperature brittle point, electrical properties and water absorptivity.

Non-halogen-containing diene copolymer elastomers such as polybutadiene, poly(styrene-butadiene) and poly(acrylonitrile-butadiene) are considered unsuitable for outdoor applications, due to their very poor heat and light resistance.

Butyl rubber, a copolymer of isobutylene with isoprene has been used in caulks and grouts, and in liquid form has been suggested for roofing applications. Again, this polymer possesses a number of deficiences in outdoor use including heat and weather resistance, low temperature brittle point, and adhesive receptivity. In so-called liquid form, the lowest molecular weight available has been 10,000. For spray application this material yields a compound which must be thinned with at least 50% of solvent by weight, which makes it expensive, highly flammable, and exhibits excessive degree of shrinkage as the solvent evaporates.

A solid depolymerized EPDM has recently become available having a number average molecular weight ($M_n$) of 90,000. As a result of its high molecular weight, this material, when compounded with fillers and curatives requires large amounts of solvent to permit its handling as a semi-solid caulk or sealant.

US Patent 3,669,918, teaches the use of blends of bituminous materials with ethylene-propylene copolymers having a molecular weight from about 50,000 to 100,000 for use as roofing compositions, protective coatings and the like. Such compositions, however, are not liquid and must be applied at temperatures of 100°C and higher. Alternatively, use of such compounds in solution would require large amounts of solvent.

US Patent 3,919,148, discloses an elastomeric paving material comprising asphalt, asphalt-soluble non-oil resistant rubbers, and high-boiling solvents. Such materials, however, are not liquid at room temperature, requiring application temperatures in excess of 150°C. They apparently gel, rather than cure, and have no storage stability, gelling soon after they are mixed.

DE—A—1494431 discloses EPDM coating compositions with a preferred molecular weight range of 3000 to 30000 which when of sufficiently low molecular weight may be applied without solvent. These compositions afford a stove enamel-like finish and are unsuitable for outdoor use. Use of reinforcing additives is not disclosed.

The possibility of employing a liquid polymer suitable or outdoor use which is in the 500 to 20,000 molecular weight range has not previously been possible, because the tensile properties attainable to this low molecular weight have been too low to be of practical use.

Brief summary of the invention

The present invention is directed to a liquid rubber composition based on liquid EPDM, suitable for coatings, especially roof coatings, flashing, caulks, and sealants. The application characteristics of the invention include the ability to be sprayed onto vertical surfaces without sagging with little or no solvent and to gel and cure under ambient conditions. The composition according to the invention preferably has a viscosity of 2500 Pa · s or less at 100°C. The cured composition is highly weather resistant and is, therefore, especially suitable for exterior use.

The composition of the present invention, which is liquid at ambient temperatures, comprises a low molecular weight EPDM polymer, or mixtures thereof; reinforcing agents; curatives; cure activators, as required; and optionally plasticizing oils and minor amounts of solvents.

Detailed description of the invention

The instant invention relates to an elastomeric composition, an essential characteristic of which is that it is a liquid at ambient temperatures, which are about 20° to 40°C. By this term "liquid" is meant in conventional terms that it will have a definite volume, but will assume the shape of its container. More specifically, it will be amenable to liquid handling techniques, including being pumped and sprayed onto a receptor surface. This composition comprises:

(A) a low molecular weight liquid EPDM polymer, with a molecular weight range from 500 to 20,000. The ethylene to propylene ratio is preferably from 85:15 to 25:75 and the termonomer, which is a copolymerizable non-conjugated diene, is preferably present in a concentration of from above 0 to 25 percent.

(B) Carbon black reinforcing agent in a preferred range of from about 10 to 150 parts per hundred parts of elastomer (phr). Non-reinforcing fillers such as clay, whiting optionally also may be added. Part of the carbon black may be replaced by other reinforcing agents like silica.

(C) Curatives. These may include the classes of peroxides, sulfur plus accelerators, and dioximes plus oxidants as exemplified by p-benzoquinone dioxime (QDO) plus lead peroxide ($PbO_2$), all of the above preferably in a range of from about 2 to 20 phr.

(D) Cure activators,.may be used as required with the specific cure systems employed. For peroxides, the activator would be a transition metal salt of an organic acid, as exemplified by cobalt or copper naphthenates. For sulfur cures, there are applicable accelerators, and for dioximes one would use oxidants such as lead peroxide, organic peroxides, or N-halogen compounds. The cure activators are preferably present at from about 0.5 to 20 phr.

(E) Optionally, plasticizing oils to adjust physical properties or viscosity. Paraffinic or naphthenic hydrocarbon oils compatible with EPDM in a range of from about 0 to 100 phr may be used. Optionally, a minor amount, preferably 35% or less, of a solvent preferably volatile at ambient temperatures, may also be employed to adjust viscosity. Aliphatic and aromatic hydrocarbons such as hexane, toluene or xylene may be used.

In addition to these constituents, the conventional adjuvants known to those skilled in the art may be employed. These include antioxidants, antiozonants, ultraviolet stabilizers, tackifiers, lubricants, and color pigments.

Furthermore, it is contemplated that viscosity modifiers and/or adhesion improvers such as thermoplastic elastomers, and block copolymers can be added at from about 1 to about 15 phr.

With the liquid EPDM polymers of this invention, unexpectedly high tensile properties are obtained at a low level of reinforcing filler (carbon black). In this invention, we thus possess an unexpected and unique combination of low viscosity, high strength and excellent weatherability.

The EPDM polymers used in this invention are copolymers of ethylene, propylene and a non-conjugated diene. In a preferred embodiment, the non-conjugated diene which is used in the EPDM terpolymer is selected from the group consisting of 1,4-hexadiene, dicyclopentadiene (DCPD), and 5-ethylidene-2-norbornene. Preparation of polymers of the above types is described in U.S. Patents 3,819,852; 3,896,094; and 3,896,096.

The molecular weight of the EPDM polymers useful in the present invention ranges from about 500 to 20,000 with a preferred range being from about 1,000 to 10,000 and most preferred being from about 4,000 to 7,000. The weight ratio of ethylene to propylene (E/P) is in particular from 85:15 to 25:75, with preferred ratios being 60:40 to 40:60 and most preferred being 55:45 to 45:55. The non-conjugated diene in the EPDM is in particular present in a range of from above zero to 25%, with a preferred range of 5% to 13%. It is desirable to employ higher weight content of non-conjugated diene in the lower molecular weight polymers and lower weight content in the higher molecular weight polymers of this invention.

The reinforcing agents employed always include carbon black. Use of carbon black is advantageous, since it provides not only reinforcement but also a large measure of ultraviolet protection. In selection of a reinforcing filler, cognizance must be taken of the well-known finding that increased reinforcement, which is desirable, is usually accompanied by increased viscosity, which for applications such as spraying, is undesirable. Relatively large particle reinforcing agents which yield significant enhancement of tear and tensile strengths, but also produce minimum viscosity increase are thus preferred.

For applications such as trowelling or gunning (piston-extruding, the compound from a cartridge) viscosity may be deliberately increased to achieve a consistency desirable for the application technique, consonant with other property requirements.

An ambient temperature curing system is preferentially employed in the composition of the present invention, since it permits application of the composition in situ, wherever it is required, without the necessity for an elevated temperature cure. In this way, we have a unique composition that is a liquid which may be stored for extended periods without curing, and which may be cured when desired. It may be applied at ambient temperatures by spraying or any desired method. The pot life may be varied from a few minutes to hours or even days, with cure being completed in situ at ambient temperature, thus offering the greatest convenience to the applier.

The term "ambient temperature", as used herein, refers to the temperature encountered both indoors and out, which during the course of the various seasons can run from below $-20°C$ to over $40°C$. The rate of cure will be slower at the lower temperature and accelerated at the higher ones.

Although there is no lower limitation on temperature, ordinarily the compositions of the present invention will not be applied at temperatures below about $5°C$. The higher temperatures encountered may reach over $40°C$ in the summer, and surface temperatures of black surfaces such as roofs or asphalt may run up to $65°C$ or higher. The important factor is that external heat need not be applied to cause the cure, thus permitting the present invention to be of greatly extended utility.

The ambient temperature cure systems operable in the present invention for EPDM polymers are illustrated by, but not limited to the following types:

1) Dioximes plus an oxidizing agent;
2) Organic peroxides;
3) Ultra-accelerated sulfur cures;
4) Halogenated phenolic resins.

The dioxime cure systems utilized are described in part in U.S. Patent 3,804,798. The dioximes include both quinoid and non-quinoid types, as described in U.S. Patent 3,804,798. This patent involves the use of N-haloamides as "activators" or oxidizing agents for the dioximes. In the present invention, any suitable oxidizing agent may be used as activator, including metal peroxides such as lead, manganese and calcium peroxides, as well as organic peroxides such as tert-butylperoxy benzoate, tert-butylperoxypivalate, and benzoyl peroxide. In cases where it is desired to accelerate the oxidative action of the organic peroxide, promoters, which are known to those skilled in the art may be added. Such promoters include transition metal salts, including those of copper, cobalt, iron and manganese, as well as tertiary amines such as dimethylaniline.

The organic peroxides are operable by themselves in the ambient temperature cure of EPDM compositions of the invention. They include the customary peroxides, such as dialkyl-, diacyl-, and peroxyesters, with the selection being dictated by practical considerations such as storage stability, pot life, and handling hazards. In usage of this nature, it is common to employ, on stability considerations, those peroxides which can be stored at room temperature, which in general, encompasses those peroxides with a 10 hour half life temperature ($t_{1/2}$) of about $85°C$ or higher. Examples of such peroxides are tert-butyl peroxyesters of benzoic acid, acetic acid and maleic, acids, and peroxyketals such as 1,1-di(tert-butylperoxy)3,3,5-trimethylcyclohexane and 1,1-di(tert-butylperoxy)cyclohexane. As described in the section on the dioxime cure, the transition metal salts and certain tertiary amines may be added to accelerate the ambient temperature cure with the peroxides.

Certain types of sulfur curing systems proceed at sufficient rates with the EPDM polymers of the present invention to be operable at ambient temperatures, particularly those in the higher ranges as are encountered during summer on black surfaces such as roofs and asphalt coated areas. These cure systems are usually combinations of sulfur with ultra-accelerator compounds, although some are sulfur donors and may be used without sulfur. Frequently, these accelerators are used in combinations with each other, producing synergistic acceleration of the cure rate. Examples of such accelerators include mercaptobenzothiazole (MBT); zinc dialkyldithiocarbamates, the alkyl groups including methyl, ethyl, butyl and benzyl; the alkylthiuram sulfides, as exemplified by tetramethylenethiuram hexasulfide; zinc-O,-O,-din-butylphosphorodithioate; alkylthioureas such as dimethyl, dibutyl and diphenyl thiourea; 2,2'-dibenzothiazyl disulfide, and xanthates such as zinc dibutylxanthate and dibutylxanthogen disulfide, activated by an amine such as dibenzylamine.

Another type of ambient temperature curatives applicable to the EPDM polymer compositions of this invention is the halogenated phenolic resins, which are halogenated condensation polymers of p-alkylphenols and formaldehyde. An example of this type is a mixture of dibromomethyloctylphenol, the dibromo dimer of the preceding compound, and the bromomethylol dimer of the same.

Since the aforementioned cure systems proceed at ambient temperature, the pot life and working life are limited. When it is desirable to have a long storage life for the compositions of the present invention, a practical method is to have it in two components, with the curative kept separate from the polymer until immediately prior to use.

In cases where the curative requires an activator, such as with the dioximes, the composition itself may be used as vehicle in a two-part system, the dioxime in one and activator in the other. With many of the cure systems, it is possible to adjust the cure time to whatever time span is desired, from a few minutes to many days. External heat may be applied to hasten the cure, if desired.

Thorough dispersion of the carbon black and the other particulate components is essential for the practice of this invention from the aspects of visual as well as physical properties. Since the liquid EPDM polymers are viscous, ranging from a few hundred to several million centipoises in viscosity, high shear mixing is necessary. This may be accomplished with suitable mixers, such as homogenizers, dispersers, and sigma blade mixers. Mixing may be done at room temperature or an elevated (30—175°C) temperature.

4

For adjusting the viscosity of the composition, usually after the other components have been added, small amounts of solvent may be used. Any compatible solvents may be employed, the most common being aliphatic and aromatic hydrocarbons such as hexane, naptha, toluene and xylene.

In addition to the previously mentioned components in the composition of the instant invention, adjuvants known to those skilled in the art may be incorporated. Such adjuvants include antioxidants, antiozoants, fillers, pigments, flame retardants, tackifiers, and thixotropes.

An important class of adjuvants is the so-called "co-agents". These are multifunctional monomeric compounds which polymerize in situ and furnish additional cross-linking. Examples of these are mono-, di-, and higher functional acrylates and methacrylates such as lauryl methacrylate, and hexanediol diacrylate.

Although the application methods of the composition of this invention are focussed on its hitherto unique ability to be sprayed with little or no solvent being added, the composition may be modified for application by many methods. Such application techniques include brushing, trowelling and gunning. By gunning is meant extruding the composition out of a small cylinder, either by piston or gas pressure. For such procedures, the composition advantageously may be thickened by any of the ways known to those skilled in the art.

By virtue of its ability to be sprayed or otherwise applied with little or no solvent, the present invention avoids the problems of shrinkage, toxicity, and flammability associated with the use of large volumes of solvent. It is thus greatly amenable to many applications with previously involved solvent-based systems, such as paints or the adhesives used to bond pre-cured or uncured elastomer sheet to a substrate. The present invention, especially when applied by spraying, is easy inexpensive, convenient, and adheres to most surfaces with no adhesive or primer coat.

The composition may be sprayed by the conventional techniques, i.e. either by compressed air, or by airless spray, which involves pumping it at high pressure (ca. 1,000 to 6,000 psi) (170.3 to 422 kg cm$^{-2}$) through a fine nozzle. Spraying may be done with a one-pump system, wherein the curatives and activator are premixed into the composition in a container and then pumped under pressure to a spray nozzle. Alternatively, the mix may be divided into two portions, one containing activator but no curvative, the other containing curative but no activator.

A two pump spray system is used for this system, the mixing of activator with curative being done in-line. Since the EPDM, polymers of this invention are inherently shear sensitive, i.e. possessing low viscosity at high shear rates such as are encountered in a spray nozzle and high viscosity at low or no shear such as are encountered when the spray is deposited upon its substrate, they are especially suited for spray application.

The outstanding weather resistance of EPDM or compositions is well known. Unlike the materials used hitherto for roof flashing and other outdoor coatings, such as neoprene, butyl rubber and polyurethanes, which require protective coatings, the EPDM compositions of the present invention can withstand outdoor exposure indefinately. In a laboratory heat test for instance, they withstand exposure to 250°F (121°C) temperatures for 40 days, retaining flexibility and the ability to withstand a 180° bend without cracking and many retain elongations in excess of 100%.

The following examples are provided only to illustrate the present invention and in no way limit its scope.

In these examples, certain ingredients were employed, which are characterised as follows:

Polymers

EP(D)M polymers:

| Name | Mn | E/P weight ratio | Termonomer and weight percent |
|---|---|---|---|
| EPDM-I | 5900 | 44/56 | 14.3% DCPD |
| EPDM-II | 3900 | 64/36 | 25% DCPD |
| EPDM-III | 8000 | 46/54 | 9.3% DCPD |
| EPDM-IV | 4400 | 43/57 | 14.5% DCPD |
| EPDM-V | 4720 | 58/42 | 21% DCPD |
| EPDM-VI | 6500 | 50/50 | 9.4% DCPD |
| EPDM-VII | 7870 | 80/20 | 14% DCPD |
| EPDM-VIII | 2850 | 52/48 | 25% DCPD |
| EP-1 | 2935 | 51/49 | — |

| Butyl rubber | Poly (co-isobutylene-isoprene), $M_n$=10,000, 4.2% unsaturation; marketed as Butyl LM 430. |

**Additives**

Carbon blacks

| MT-90 | Thermal black, N990 type, surface area, average 11 sq m/g; marketed as Statex MT-90 |
| SL-90 | Large particle black, surface area average 24 sq m/g; marketed as United SL-90. |

Plasticizing oils

| Paraffinic Oil A | Paraffinic oil, ASTM D2226, Type 104B, aromatics 16.3%; marketed as Sunpar 150. |
| Paraffinic Oil B | Paraffinic oil, ASTM D2226, Type 104B, aromatics 23.5%; marketed as Sunpar 2280. |
| Chlorinated Paraffin | Chlorinated paraffin; formula $C_{20}C_{37}Cl_5$, viscosity 300 cps at 25°C. Marketed as Chlorowax 100. |

Tackifiers

| Tackifier A | Hydrocarbon resin, softening point 95—101°C, iodine number 30. |
| Tackifier B | Mixed olfein polymer, softening point 100°C. |

Other ingredients

| Naugard 445 Trademark: (Uniroyal) | p,p'-bis(phenylisopropyl)diphenylamine |
| Irganox 1076 Trademark: (Ciba Geigy) | Octadecyl bis-3,5-di-t-butyl-4-hydroxyphenyl) propionate. |
| Naugard Q Trademark: (Uniroyal) | Polymerized 1,2-dihydro-2,2,4-trimethyl-quinoline. |
| Flexone 7F Trademark: (Uniroyal) | N-phenyl-N'(1,3-dimethylbutyl)-p-phenylene-diamine. |
| BLE-25 Trademark: (Uniroyal) | High temperature reaction product of diphenylamine and acetone. |
| Sunproof Jr. Trademark: (Uniroyal) | Mixture of waxy materials, melting point 57—61°C. |
| Mistron Vapor Trademark: (Cyprus Industrial Mineral Co.) | Magnesium silicate, particle size 6 microns maximum. Specific surface area 20 sq m/g. |
| Halane Trademark: (BASF Wyandotte) | 1,3-dichloro-5,5-diethyl-hydantoin. |
| Kadox 15 Trademark: (Gulf & Western) | Zinc oxide. |
| Betaprene H-100 Trademark: (Reichold Chemical) | Polymer of mixed olefins. |
| Wingtack 95 Trademark: (Goodyear) | Synthetic polyterpene |

## Example 1

The following composition was mixed in a high speed homogenizer (Eppenbach Hom-Mixer, Model L-1) and poured into 1/16″ (1.6 mm) deep cavity molds for curing.

|  | Parts by weight |
| --- | --- |
| EPDM-I | 100 |
| MT-90 Carbon Black | 80 |
| Paraffinic Oil A | 25 |
| Kadox 15 | 7.5 |
| Naugard 445 | 0.5 |
| Wingtack 95 | 10 |
| QDO | 7 |
| Halane | 6 |
| Xylene | 60 |

Although the as-mixed solids content is 80%, there is usually a 5% increase in total solids in these compositions due to evaporation losses during mixing. The viscosity of the mix was similar to that of honey, so that it was readily sprayable, brushable and trowelable. After two weeks standing at room temperature (about 75°) (24°C), the samples were removed from the molds and yielded the following physical properties:

| Tensile strength | 395 psi (27.8 kg cm$^{-2}$) |
| --- | --- |
| Elongation (break) | 197% |
| Hardness (Shore A) | 36 |

Samples of this composition, after exposure on a roof for one year, were still resilient and flexible with no surface embrittlement.

## Example 2

The following compositions was mixed in a high speed homogenizer in a manner similar to that employed in Example 1.

|  | Parts by weight |
| --- | --- |
| EPDM-II | 100 |
| SL-90 Carbon Black | 80 |
| Paraffinic Oil A | 25 |
| Kadox 15 | 10 |
| Stearic Acid | 2 |
| Wingtack 95 | 7.5 |
| Naugard 445 | 1 |
| Naugard Q | 1 |
| QDO | 8.5 |
| Xylene | 80 |

After mixing, the percent solids was 75%. Without the addition of an oxidant to activate the QDO curative the mixture was stable for at least six months. Its viscosity, as measured in a Broofkield Viscometer, was 240,000 cps (2400 g cm$^{-1}$s$^{-1}$) at 0.5 rpm and 28,000 cps (280 g cm$^{-1}$s$^{-1}$) at 10 rpm. The ratio of the two values, 8.6, is a measure of the shear sensitivity, or psuedoplasticity of the composition.

7

# EP 0 182 470 B1

A mixture similar to the above, but containing 62% solids, and Brookfield viscosities of 80,000 cps (800 $g\ cm^{-1}s^{-1}$) at 0.5 rpm and 7600 (76 $g\ cm^{-1}s^{-1}$) at 10 rpm, a ratio of 10.5. To 50 grams of this mixture was added 0.8 grams of Halane dissolves in 2.5 grams cyclohexanone plus 1.6 grams of a 3:2 mixture of lead dioxide ground in dibutyl phthalate. Its Brookfield viscosities at 0.5 and 10 rpm were then measured at intervals, with results as shown below:

| Minutes after adding oxidants | Brookfield viscosity (cps) (($10^{-2}g\ cm^{-1}s^{-1}$)) at | |
|---|---|---|
| | 0.5 rpm | 10 rpm |
| 0 | 80,000 | 16,600 |
| 5 | 60,000 | 9,400 |
| 10 | 32,000 | 10,000 |
| 20 | 40,000 | 10,000 |
| 40 | 48,000 | 11,000 |
| 80 | 56,000 | 12,400 |
| 160 | 120,000 | 18,400 |
| 320 | 252,000 | 35,000 |
| 420 | 344,000 | 54,200 |
| 24 hours | ————Gelled———— | |

This composition thus has a useful work life of more than seven hours, which can be adjusted by changing the quantities of Halane (rapid cure rate) and lead dioxide (slow cure rate).

Example 3

The following mixtures were made in a high speed sigma blade mixer:

| | Parts by weight | |
|---|---|---|
| | A | B |
| EPDM-III | 100 | 100 |
| SL-90 Carbon black | 80 | 80 |
| Paraffinic oil A | 25 | 25 |
| Kadox 15 | 7.5 | 7.5 |
| Stearic acid | 1.5 | 1.5 |
| Wingtack 95 | 7.5 | 7.5 |
| Irganox 1076 | 0.5 | 0.5 |
| Tris(nonylphenyl) phosphite | 1 | 1 |
| QDO | 9.8 | — |
| Lead dioxide (60% in dibutyl phthalate) | — | 28.3 |
| Xylene | 58 | 44.3 |
| % Solids (by measurement) | 90 | 88 |

8

A and B were mixed together and diluted with toluene to 74% total solids. This mixture could then be sprayed, using a single pump system, at 2500 psi (176 kg cm$^{-2}$) through a 0.026" (0.066 cm) fan-shaped spray nozzle. The spray was fine, with a minimum of "fingering" and could be applied evenly.

The mixture of A and B, when given an accelerated cure for 24 hours at room temperature plus 48 hours at 60°C showed a tensile strength of 185 psi (13 kg cm$^{-2}$) with an elongation at 135% at break.

Example 4

The following formula was mixed in a high speed sigma blade mixer:

|  | Parts by weight |
|---|---|
| EPDM-IV | 100 |
| SL-90 Carbon black | 80 |
| Paraffinic oil A | 25 |
| Kadox 15 | 7.5 |
| Naugard 445 | 0.5 |
| Wingtack 95 | 10 |
| QDO | 7 |
| Xylene | 40 |
| % Total solids (by measurement) | 88 |

This composition could be sprayed at about 6000 psi (422 kg cm$^{-2}$) through a 0.013" (0.33 mm) nozzle onto a vertical surface to form a coherent layer which showed no sagging or dripping.

Example 5

The following composition was mixed in a high speed homogenizer:

|  | Parts by weight |
|---|---|
| EPDM-I | 100 |
| SL-90 Carbon black | 80 |
| Paraffinic oil A | 25 |
| Kadox 15 | 7.5 |
| Betaprene H-100 | 10 |
| Naugard 445 | 0.5 |
| QDO | 7 |
| Halane | 2.2 |
| Lead dioxide (3:2 in dibutyl phthalate) | 4.4 |
| Xylene | 60 |

After mixing, the composition was poured into 1/16" (1.6 mm) cavity molds and given an accelerated cure of 24 hours at room temperature and 48 hours at 60°C. Its properties were: tensile strength 320 psi (22.5 kg cm$^{-2}$), breaking elongation 305% and hardness 39 Shore A.

# EP 0 182 470 B1

## Example 6

For comparison with the present invention a composition based on liquid butyl rubber is prepared using the following recipe:

|  | Parts by weight |
|---|---|
| Butyl rubber | 100 |
| MT 90 Carbon black | 150 |
| QDO | 3.5 |
| Lead dioxide | 7.5 |
| Dibtuyl phthalate* | 6.75 |
| Stearic acid* | 0.75 |
| Toluene | 254 |
| % Total solids (calculated) | 51.4 |

Remarks:

* Furnished as dispersion prepared on a paint mill.

The composition, has the following properties after cure:

**One month at room temperature**

| | |
|---|---|
| Tensile strength (psi) (kg cm$^{-2}$) | 280 (19.6) |
| Elongation (%) | 180 |

**One month at room temperature and 3 days at 70°C**

| | |
|---|---|
| Tensile strength psi (kg cm$^{-2}$) | 490 (34.4) |
| Elongation (%) | 95 |

10

Example 7
This example illustrates the formulation of a composition containing a chlorinated paraffin as plasticizing oil, a tackifier, and a thixotrope system.

|  | Parts by weight |
|---|---|
| EPDM-V | 100 |
| MT-90 Carbon black | 60 |
| Mistron vapor | 2.5 |
| Ethylene glycol | 1 |
| Chlorinated paraffin | 30 |
| Antimony oxide | 5 |
| Kadox 15 | 7.5 |
| Stearic acid | 1 |
| Flexzone 7F | 1 |
| Sunproof Jr. | 0.5 |
| Naugard 445 | 1 |
| Wingtack 95 | 10 |
| QDO | 6 |
| Halane | 8 |
| Xylene | 35 |

This composition thinned out rapidly as it was stirred, indicating its pseudoplastic, shear sensitive property. When cured in a cavity mold for two weeks at room temperature, it showed the following properties:

Tensile strength (psi):     205 (14.4 kg cm$^{-2}$)

Breaking elongation (%):   175

Hardness (Shore A):        43

Example 8

The following were mixed in high speed sigma blade mixer:

| | Parts by weight | | |
| --- | --- | --- | --- |
| | A | B | C |
| EPDM-III | 80 | 60 | 40 |
| EP-I | 20 | 40 | 60 |
| SL-90 Carbon black | 80 | 80 | 80 |
| Kadox 15 | 6 | 4.5 | 3 |
| Stearic acid | 1.2 | .9 | 0.45 |
| Irganox 1076 | .5 | .5 | .5 |
| Tris(nonylphenyl) phosphite | 1 | 1 | 1 |
| Wingtack 95 | 7.5 | 7.5 | 7.5 |
| QDO | 3.9 | 3.9 | 3.9 |
| Xylene | 33 | 33 | 33 |
| % Solids (by measurement) | 88.6 | 88.4 | 90.5 |

To 100 gram portions of each was added 3.5 grams tert-butyl peroxypivalate, 1 gram cobalt naphthenate (6%), and 0.3 grams triethanolamine. These were then poured into 1/16″ (1.6 mm) cavity molds and cured for 24 hours at room temperature, 48 hours at 70°C and 90 hours at 50°C. The cured samples had the following properties:

| | A | B | C |
| --- | --- | --- | --- |
| Tensile strength psi (kg cm$^{-2}$) | 190 (13.4) | 65 (4.6) | 120 (8.4) |
| Breaking elongation (%) | 117 | 107 | 177 |
| Hardness (Shore A) | 49 | 39 | 54 |

Example 9

The following compositions illustrate some of the various modes of ambient temperature cure possible with the compositions of the present invention. They were all mixed with a high speed homogenizer:

| | Parts by weight | | |
|---|---|---|---|
| | A | B | C |
| EPDM-VI | 100 | 100 | 100 |
| SL-90 Carbon black | 80 | 80 | 80 |
| Paraffinic oil A | 25 | 25 | 25 |
| Kadox 15 | 7.5 | 7.5 | 7.5 |
| Stearic acid | 1.5 | 1.5 | 1.5 |
| Wingtack 95 | 7.5 | 7.5 | 7.5 |
| QDO | 4.9 | — | 4.5 |
| 1,6-hexanediol diacrylate | — | 2.0 | — |
| Tert-butyl peroxybenzoate | 6.9 | 5.0 | — |
| Halane | — | — | 3.2 |
| Lead dioxide (60% in dibutyl phthalate) | — | — | 6.4 |
| BLE-25 | 1.0 | — | — |
| Naugard 445 | — | 1.0 | 1.0 |
| Cobalt naphthenate (6%) | 2.1 | 1.5 | — |

| Properties after 16 hours at 24°C and 48 hours at 60°C | Parts by weight | | |
|---|---|---|---|
| | A | B | C |
| Tensile (psi)(kg cm$^{-2}$) | 338 (23.8) | 364 (25.6) | 239 (16.8) |
| Breaking elongation (%) | 225 | 170 | 237 |
| Tear strength (pli) Uniroyal "Trouser Tear"[a] | 22 | 11 | 18 |
| ASTM #D624 (Die "C" Tear) | 58 | 46 | 40 |
| Hardness (Shore A) | 36 | 39 | 46 |

[a]Samples 0.075″ (1.9 mm) thick are cut in the shape of a pair of trousers and the legs inserted into the jaws of a tensile test machine. The test is then run according to ASTM #D624.

Composition A represents an example of a QDO cure using a peroxide oxidant to activate the QDO.

Composition B represents an example of a cure using a peroxide combined with a diacrylate "coagent".

Composition C represents an example of a QDO cure using a combination of Halane and lead dioxide as oxidants to activate the QDO.

In each case, the compositions were poured into 1/16″ (1.6 mm) cavity molds for curing, immediately after addition of activator.

## EP 0 182 470 B1

### Example 10

Composition C of Example 8, after cure, was aged for 7 days at 121°C and then for a total of 40 days at 121°C in a circulating air oven. Its properties after aging were:

|  | Unaged | Aged 7 days at 121°C | Aged 40 days at 121°C |
|---|---|---|---|
| Tensile psi (kg cm$^{-2}$) | 239 (16.8) | 372 (26.1) | 365 (25.7) |
| Breaking elongation % | 237 | 117 | 100 |
| Hardness (Shore A) | 46 | 47 | 61 |
| "Trouser" tear (pli) | 18 | 21 | 11 |
| Die "C" tear (pli) | 40 | 47 | 56 |

None of the aged sampled cracked when folded 180°.

### Example 11

|  | Parts by weight |
|---|---|
| EPDM-VII | 100 |
| Paraffinic oil B | 25 |
| SL-90 Carbon black | 80 |
| Kadox 15 | 7.5 |
| Stearic acid | 1.5 |
| Wingtack 95 | 7.5 |
| Irganox 1076 | 0.2 |
| QDO | 5.54 |
| Halane | 3.95 |
| Manganese dioxide | 1.74 |
| Xylene | 25 |

After mixing, the composition was poured into 1/16" (1.6 mm) molds and cured at 24°C for 16 hours and at 60°C for 24 hours. Its properties were:

| Tensile (psi) | 330 |
|---|---|
| Breaking elongation (%) | 177 |
| Hardness (Shore A) | 61 |

## Example 12

The following composition was mixed with a high speed homogenizer:

|  | Parts by weight |
|---|---|
| EPDM-VIII | 100 |
| Paraffinic oil B | 25 |
| SL-90 Carbon black | 80 |
| Kadox 15 | 7.5 |
| Stearic acid | 1.5 |
| Wingtack 95 | 7.5 |
| Naugard 445 | 1 |
| Irganox 1076 | 0.2 |
| QDO | 10.2 |
| Halane | 7.3 |
| Lead dioxide (3:2 in dibutyl phthalate) | 14.6 |

Immediately after mixing, the composition was poured into 1/16″ (0.16 mm) cavity molds and cured at 24°C for 16 hours and at 60°C for 24 hours. The properties were:

| Tensile psi (kg cm$^{-2}$) | 295 (20.1) |
|---|---|
| Breaking elongation (%) | 87 |
| Hardness (Shore A) | 65 |

## Example 13

This example shows an EPDM composition which is curable with a peroxide and an activator at room temperature. The instant peroxide is t-butyl peroxybenzoate and the activator a 6% solution of cobalt naphthenate in mineral spirits.

| Ingredients | phr |
|---|---|
| EPDM-1 | 100 |
| Sunpar 150 oil | 25 |
| United SL-90 Black | 80 |
| Zinc oxide | 7.5 |
| Stearic acid | 2.0 |
| Wingtack-95 tackifier | 7.5 |
| t-butyl peroxybenzoate | 5 |
| Cobalt naphthenate (6%) | 1.5 |

Properties measured after 16 hours at room temperature and 48 hours at 60°C in an air circulating oven.

15

# EP 0 182 470 B1

Tensile psi (kg cm$^{-2}$)    531 (37.3)

Elongation (%)        55

Hardness (Shore A)      60

The compositions of this invention may also be used for the purpose of sealing and waterproofing such as coating of building foundations and side walls as well as for living ponds, trenches and canals. If so desired, the composition of this invention may serve as reinforcing agent in asphalt and bitumen.

## Claims

1. A composition characterised in that it comprises an ethylene-propylene-non-conjugated diene terpolymer, said polymer having a molecular weight of 500—20,000; carbon black reinforcing agent; and a curative for said polymer, said composition further including no more than a minor amount of solvent.

2. A composition according to Claim 1, characterised in that it has a viscosity of 2500 Pa.sec or less at 100°C.

3. A composition according to any preceding Claim characterised in that it also contains an activator for said curative.

4. A composition according to any preceding Claim characterised in that said composition has a solids content of 74 percent or more.

5. A membrane characterised in that it comprises an elastomeric sheet composed of a composition as claimed in any preceding Claim.

6. A method of fabricating a waterproof membrane characterised in that it comprises spraying onto a substrate a composition as claimed in any of Claims 1 to 4, and curing said composition.

7. A method of fabricating a waterproof membrane characterised in that it comprises forming a sheet from a composition as claimed in any of Claims 1 to 4 wherein the copolymer has a molecular weight of from about 1,000 to about 10,000, and curing said composition.

8. A roof covering characterised in that it is made from the membrane of Claim 5.

9. A wall, pond or aqueduct liner characterised in that it is made from the membrane of Claim 5.

## Patentansprüche

1. Mischung, dadurch gekennzeichnet, daß sie ein Terpolymer aus Ethylen, Propylen und nichtkonjugiertem Dien, wobei das Polymer ein Molekulargewicht von 500 bis 20.000 hat, als Verstärkungsmittel dienenden Ruß und ein Vulkanisiermittel für das Polymer enthält, wobei die Mischung ferner nicht mehr als eine geringfügige Lösungsmittelmenge enthält.

2. Mischung nach Anspruch 1, dadurch gekennzeichnet, daß sie eine Viskosität von 2500 Pa.s oder weniger bei 100°C hat.

3. Mischung nach einem der vorhergehenden Ansprüche, dadurch gekennzeichnet, daß sie auch einen Aktivator für das Vulkanisiermittel enthält.

4. Mischung nach einem der vorhergehenden Ansprüche, dadurch gekennzeichnet, daß die Mischung einen Feststoffgehalt von 74% oder mehr hat.

5. Membran, dadurch gekennzeichnet, daß sie eine Elastomerfolie ist, die aus einer Mischung nach einem der vorhergehenden Ansprüche besteht.

6. Verfahren zur Herstellung einer wasserdichten Membran, dadurch gekennzeichnet, daß auf ein Substrat eine Mischung nach einem der Ansprüche 1 bis 4 aufgespritzt und die Mischung vulkanisiert wird.

7. Verfahren zur Herstellung einer wasserdichten Membran, dadurch gekennzeichnet, daß aus einer Mischung nach einem der Ansprüche 1 bis 4, bei der das Copolymer ein Molekulargewicht von etwa 1000 bis etwa 10.000 hat, eine Folie geformt wird und die Mischung vulkanisiert wird.

8. Dachhaut, dadurch gekennzeichnet, daß sie aus der Membran nach Anspruch 5 hergestellt worden ist.

9. Auskleidung für Wände, Teiche bzw. Becken oder offene Wasserleitungen, dadurch gekennzeichnet, daß sie aus der Membran nach Anspruch 5 hergestellt worden ist.

## Revendications

1. Composition caractérisée en ce qu'elle comprend un terpolymère éthylène-propylène-diène non conjugué, ledit polymère ayant un poids moléculaire de 500—20.000; un agent de renforcement de noir de carbone; et un agent durcisseur dudit polymère, ladite composition ne comprenant de plus pas plus qu'une quantité mineure d'un solvant.

2. Composition selon la revendication 1, caractérisée en ce qu'elle a une viscosité de 2.500 Pa.s ou moins à 100°C.

3. Composition selon l'une quelconque des revendications précédentes caractérisée en ce qu'elle contient également un activateur dudit agent durcisseur.

16

4. Composition selon l'une quelconque des revendications précédentes caractérisée en ce que ladite composition a une teneur en solides de 74% ou plus.

5. Membrane caractérisée en ce qu'elle comprend une feuille en élastomère formée d'une composition selon toute revendication précédente.

6. Méthode de fabrication d'une membrane imperméable caractérisée en ce qu'elle comprend la pulvérisation, sur un substrat, d'une composition selon l'une des revendications 1 à 4, et le durcissement de ladite composition.

7. Méthode de fabrication d'une membrane imperméable caractérisée en ce qu'elle comprend la formation d'une feuille d'une composition selon l'une des revendications 1 à 4 où le copolymère a un poids moléculaire d'environ 1.000 à environ 10.000 et le durcissement de ladite composition.

8. Couverture de toit caractérisée en ce qu'elle est faite de la membrane de la revendication 5.

9. Garniture de mur, pièce d'eau ou aqueduc caractérisée en ce qu'elle est faite de la membrane de la revendication 5.